(19) Europäisches Patentamt
European Patent Office
Office européen des brevets

(11) **EP 4 737 547 A1**

(12) **EUROPEAN PATENT APPLICATION**


(43) Date of publication:
**06.05.2026 Bulletin 2026/19**

(21) Application number: **24209734.3**

(22) Date of filing: **30.10.2024**

(51) International Patent Classification (IPC):
***C11D 3/22*** *(2006.01)* ***C11D 3/37*** *(2006.01)*
***C11D 17/04*** *(2006.01)* ***B65D 65/46*** *(2006.01)*
***C08F 216/06*** *(2006.01)* ***C08J 5/18*** *(2006.01)*
***C08L 5/06*** *(2006.01)* ***C08L 29/04*** *(2006.01)*

(52) Cooperative Patent Classification (CPC):
(C-Sets available)
**C11D 17/042; C08J 5/18; C08L 5/06; C08L 29/04; C11D 3/222; C11D 3/3753;** C08J 2329/04; C08J 2405/06 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicant: **The Procter & Gamble Company**
**Cincinnati, OH 45202 (US)**

(72) Inventors:
- **COURCHAY, Florence Catherine**
  **1853 Strombeek-Bever (BE)**
- **LOCKE, Erica Lynne**
  **Cincinnati, OH, 950202 (US)**
- **SOARES, Mario Nogueira**
  **1853 Strombeek-Bever (BE)**
- **ZANNONI, Luke Andrew**
  **Cincinnati, 45202 (US)**

(74) Representative: **P&G Patent Belgium UK**
**N.V. Procter & Gamble Services Company S.A.**
**Temselaan 100**
**1853 Strombeek-Bever (BE)**


(54) **WATER-SOLUBLE FILM AND WATER-SOLUBLE UNIT DOSE ARTICLE MADE THEREFROM**


(57) Water-soluble film and unit dose article made therefrom, wherein the water-soluble film comprises a water-soluble polymer, wherein the water-soluble polymer comprises a blend of:

iii) pectin; and
iv) polyvinyl alcohol; and
wherein the pectin and the polyvinyl alcohol polymer are in a weight ratio of from 1:9 to less than 1: 1.


FIG. 1

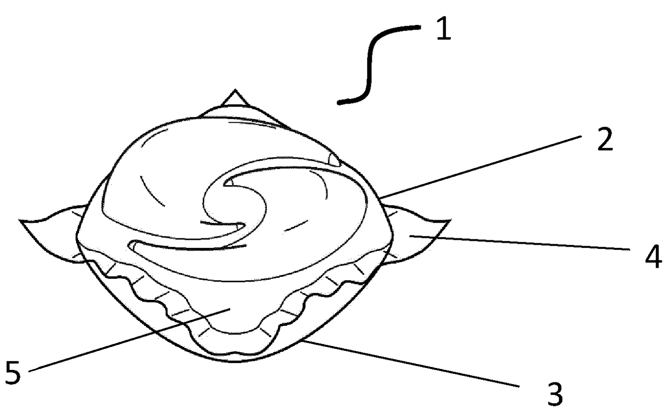


EP 4 737 547 A1

(52) Cooperative Patent Classification (CPC): (Cont.)

C-Sets
**C08L 29/04, C08L 5/06;**
**C08L 29/04, C08L 5/06, C08K 5/053**

## Description

### FIELD OF THE INVENTION

Water-soluble film and unit-dose article made therefrom.

### BACKGROUND OF THE INVENTION

It is difficult to obtain water-soluble films suitable for laundry applications, especially liquid laundry formulations, that exhibit optimal dissolution, excellent processability, and robust mechanical properties and strength, while being compatible with the enclosed liquid laundry detergent composition. Water-soluble films are widely used in laundry applications, such as detergent unit dose articles or sachets, where they provide convenient and precise dosing while eliminating the need for handling bulk detergent products.

WO 2021/127073A1 discloses a water-soluble film and unit dose article made therefrom. The water-soluble film comprises a water-soluble polymer comprising a blend of a caseinate polymer and a polyvinyl alcohol homopolymer.

WO202325655A1 and WO202325648A1 relate to water-soluble film comprising pectin and water-soluble capsules utilizing said film.

Existing water-soluble films often face challenges in simultaneously achieving desirable dissolution characteristics, ease of manufacturing, compatibility with the liquid laundry detergent composition and mechanical properties required to withstand rigorous handling and transportation.

The specific challenges that need to be overcome are as follows:
Dissolution Performance: Existing water-soluble films for laundry applications may exhibit suboptimal dissolution properties. They may dissolve too slowly, leaving residues on fabrics or delaying the cleaning process, compromising the effectiveness of the laundry products contained within, or they may dissolve too quickly, with risk to premature rupture upon accidental exposure to water. Achieving the ideal dissolution profile is crucial for ensuring effective and efficient delivery of the laundry products during the washing process.

Compatibility with the enclosed detergent composition: When enclosing a detergent composition in a water-soluble film an exchange of detergent actives, especially solvent, may happen between the film and the enclosed detergent composition, which may turn the film sensitive to breakage when getting de-plasticized, or too floppy and sticky when getting overplasticized.

Processability: Water-soluble films must be processable using common manufacturing techniques, such as extrusion or casting processes, while maintaining consistent quality and uniformity. They should also be deformable under a vacuum and/or thermal deformation process. Challenges arise in obtaining water-soluble films that can be easily processed without compromising their dissolution properties or compromising the integrity of the film structure.

Mechanical Properties and Strength: Water-soluble films need to possess adequate mechanical properties and strength to withstand handling, packaging, transportation, and storage without tearing or breaking. Ensuring the films exhibit sufficient tensile strength, flexibility, and resistance to abrasion and impact is critical to maintaining their structural integrity throughout the product's lifecycle.

There is also a demand for decreasing the content of petrochemical derived ingredients in consumer goods and rely more on actives derived from renewable sources.

Finding a solution to these challenges is essential to meet the increasing demand for convenient and sustainable laundry products that utilize water-soluble films. The solution aims to develop a novel water-soluble film composition and manufacturing process that simultaneously addresses the dissolution performance, processability, film-detergent composition compatibility and mechanical properties required for effective and reliable use in laundry applications, while increasing the renewable sourced actives content in the water-soluble film.

### SUMMARY OF THE INVENTION

A first aspect of the present invention is a water-soluble film, wherein the water-soluble film comprises a water-soluble polymer, wherein the water-soluble polymer comprises a blend of pectin and polyvinyl alcohol; the pectin and the polyvinyl alcohol are in a weight ratio of from 1:9 to less than 1:1, preferably from 1:9 to 3:7. The film of the invention presents good dissolution, good compatibility with treatment compositions and good mechanical properties, that contribute to a good processability during the process for making laundry capsules, at an increased bioderived content versus traditional polyvinyl alcohol based films.

Preferably, the polyvinyl alcohol has an average percentage degree of hydrolysis of from 75% to 100%, and an average viscosity of from 1 mPas to 30 mPas, and wherein the viscosity is measured as a 4% aqueous solution in demineralized water at 20°C.

A second aspect of the present invention is a water-soluble unit dose article comprising a water-soluble film

according to the present invention, a treatment composition and at least one internal compartment, wherein the treatment composition is contained within the at least one compartment.

BRIEF DESCRIPTION OF THE DRAWINGS

FIG. 1 is a water-soluble unit dose article according to the present invention.

DETAILED DESCRIPTION OF THE INVENTION

Water-soluble film

A first aspect of the present invention is a water-soluble film. The water-soluble film comprises a water-soluble polymer, wherein the water-soluble polymer comprises a blend of pectin and polyvinyl alcohol. The pectin and the polyvinyl alcohol are described in more detail below.

The water-soluble film of the present invention is soluble in water. The water-soluble film preferably has a thickness of between 30μm and 150μm, preferably between 50μm and 100μm, most preferably between 60μm and 85μm.

The water-soluble film properties:

The water-soluble film preferably has a dissolution time at a thickness of about 76 micron of less than 90 seconds, preferably less than 60 seconds, more preferably less than 30 seconds at 10°C, measured according to the MonoSol Test Method 205 (MSTM 205), as described in U.S. Patent No. 7,022,656, column 8, lines 10 to 57. Preferably the water-soluble film has a dissolution time at a thickness of about 76 micron of less than 120 seconds, preferably less than 90 seconds, more preferably less than 60 seconds, even more preferably less than 30 seconds at 5°C, measured according to the MonoSol Test Method 205 (MSTM 205). Preferably, the disintegration time of the film at a thickness of about 76 micron is about 40 seconds or less, or about 33 seconds or less at a temperature of 10°C, measured according to the MonoSol Test Method 205 (MSTM 205). Even more preferably, the disintegration time of the film at a thickness of about 76 micron is about 40 seconds or less, or about 30 seconds or less at a temperature of 5°C, measured according to the MonoSol Test Method 205 (MSTM 205).

Film disintegration times (I) and film dissolution times (S) can be corrected to a standard or reference film thickness (76 microns) using the exponential algorithms shown below in Equation 1 and Equation 2, respectively.

$$\text{Icorrected} = \text{Imeasured} \times (\text{reference thickness}^2/\text{measured thickness}^2)$$

$$\text{Scorrected} = \text{Smeasured} \times (\text{reference thickness}^2/\text{measured thickness}^2)$$

The polyvinyl alcohol is preferably selected from a polyvinyl alcohol homopolymer, a polyvinyl alcohol copolymer, or a mixture thereof, the polyvinyl alcohol homopolymer, the polyvinyl alcohol copolymer, or the mixture thereof, has an average degree of hydrolysis of from 75% to 100%, preferably from 80% to 95% preferably of from 85% to 90% as measured through standard method JIS K6726, and a viscosity of from 1 mPas to 30 mPas, preferably from 5 mPas to 25mPas, preferably from 10 mPas to 25 mPas measured as a 4% polymer solution in demineralized water at 20°C using a Brookfield LV type viscometer with UL adapter as described in British Standard EN ISO 15023-2:2006 Annex E Brookfield Test method, and in the case of an anionic polyvinyl alcohol copolymer, has an average degree of anionic substitution of from 1% to 9%, preferably from 1% to 5% as measured through 1H-NMR. General classes of anionic monomer units which can be used for the anionic polyvinyl alcohol co-polymer include the vinyl polymerization units corresponding to monocarboxylic acid vinyl monomers, their esters and anhydrides, dicarboxylic monomers having a polymerizable double bond, their esters and anhydrides, vinyl sulfonic acid monomers, and alkali metal salts of any of the foregoing, and mixtures thereof. Examples of suitable anionic monomer units include the vinyl polymerization units corresponding to vinyl anionic monomers including vinyl acetic acid, maleic acid, monoalkyl maleate, dialkyl maleate, monomethyl maleate, dimethyl maleate, maleic any hydride, fumaric acid, monoalkyl fumarate, dialkyl fumarate, monomethyl fumarate, dimethyl fumarate, fumaric anyhydride, itaconic acid, monomethyl itaconate, dimethyl itaconate, itaconic anhydride, vinyl sulfonic acid, allyl sulfonic acid, ethylene sulfonic acid, 2-acrylamido-1-methylpropanesulfonic acid, 2-acrylamido-2-methylpropanesulfonic acid, 2-methylacrylamido-2-methylpropanesulfonic acid, 2-sufoethyl acrylate, alkali metal salts of the foregoing (e.g., sodium, potassium, or other alkali metal salts), esters of the foregoing (e.g., methyl, ethyl, or other C1-C4 or C6 alkyl esters), and combinations thereof (e.g., multiple types of anionic monomers or equivalent forms of the same anionic monomer). Preferably, the anionic moiety unit is selected from a sulphonate, a carboxylate, or a mixture thereof, more preferably a carboxylate, most preferably an acrylate, a methacrylate, a maleate, an itaconate, or a mixture

thereof. Preferably the polyvinyl alcohol is selected from a polyvinyl alcohol homopolymer, solely consisting of vinyl alcohol units and optionally vinyl acetate units, hence being free of anionic monomer units.

The water-soluble film preferably has a residue value at a film thickness of 76 micron measured following the Dissolution Chamber (DC) Residue Test of about 50 wt.% or less, preferably about 45 wt.% or less, more preferably about 40 wt.% or less or most preferably about 35 wt.% or less at 20°C, or 75 wt.% or less, preferably about 70 wt.% or less, more preferably about 60 wt.% or less or most preferably about 50 wt.% or less at 5°C. Generally, lower DC residue values are desirable to reduce the likelihood of residual film remaining on a washed article subjected to stressed washing conditions (e.g., in low water conditions (such as in overloading of the washing machine) and in cold wash water conditions). Such residues can be dissolved upon an additional exposure to water but they could require additional effort from the user and as such are not desirable.

In general, higher tensile strength values are desirable because they would give rise to stronger water-soluble unit dose articles. Higher values of e-Modulus are desirable from the perspective of providing water-soluble unit dose articles having a greater stiffness and a lower likelihood of deforming and sticking to each other when loaded on top of each other during production. Preferably, when measured at 23°C and 40%RH, the water-soluble film has a tensile strength or stress at break of at least 20 N/mm2, preferably between 20 N/mm2 and 60 N/mm2, more preferably between 25 N/mm2 and 60 N/mm2, a modulus at 10% elongation of at least about 20 N/mm2, and a modulus at 100% elongation of at least 12 N/mm2. Further, the water-soluble film has a tensile strain at break, as measured following the same method, of from about 100% to about 1600%, preferably from 300% to 1200%, more preferably from about 400% to about 800%. In addition, the water-soluble film preferably has an elongation modulus, as measured following the same method, of from about 1MPa to about 20MPa, preferably from about 1 to about 15MPa. When measured at 100°C and 40%RH, the water-soluble film has a tensile strain at break, as measured following the same method, of at least from about 100%

Preferably, the water-soluble film and/or the water-soluble polymeric resin and/or the individual water-soluble polymers have a biodegradation rate of at least 60%, preferably at least 65%, more preferably at least 70%, after 60 days, or at least 60%, preferably at least 65%, more preferably at least 70%, after 28 days according to OECD 301B testing.

Preferably, the water-soluble film has a glass transition temperature of less than -5°C and a melting transition of more than 80°C as measured by DSC standard procedure.

A negative film swelling value may result in a brittle film upon product ageing, while a film swelling value of more than 15% may render the overall unit dose article become floppy upon ageing and as such aesthetically unappealing. Preferably the film swelling value is between 3% and 15%, more preferably between 5% and 15%.

Preferably, the weight ratio of pectin to polyvinyl alcohol is from 1:9 to less than 1:1, preferably from 1:9 to 3:7. Preferably, the weight percentage of the pectin and the polyvinyl alcohol add up to 100% by weight of the polymeric resin in the water-soluble film. The skilled person in the art will know how to prepare the polymeric resin and each individual polyvinyl alcohol and pectin polymer.

The water-soluble polymer may be present between 50% and 95%, preferably between 55% and 90%, more preferably between 60% and 80% by weight of the film.

Preferably, the water-soluble film comprises a non-aqueous plasticizer. Preferably, the non-aqueous plasticizer is selected from polyols, sugar alcohols, and mixtures thereof. Suitable polyols include polyols selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof. Suitable sugar alcohols include sugar alcohols selected from the group consisting of isomalt, maltitol, sorbitol, xylitol, erythritol, adonitol, dulcitol, pentaerythritol and mannitol, or a mixture thereof. More preferably the non-aqueous plasticizer is selected from glycerol, 1,2-propanediol, dipropylene glycol, 2-methyl-1,3-propanediol, trimethylolpropane, triethyleneglycol, polyethyleneglycol, sorbitol, or a mixture thereof, most preferably selected from glycerol, sorbitol, trimethylolpropane, dipropylene glycol, and mixtures thereof. One particularly suitable plasticizer system includes a blend of glycerol, sorbitol and 2-ethyl-2-hydroxymethyl-1,3-propanediol. Another particularly suitable plasticizer system includes a blend of glycerin, dipropylene glycol, and sorbitol. Preferably, the film comprises between 5% and 50%, preferably between 10% and 40%, more preferably between 20% and 30% by weight of the film of the non-aqueous plasticizer.

Preferably, the water-soluble film according to the invention comprises a surfactant. Preferably, the water-soluble film comprises a surfactant in an amount between 0.1% and 5%, preferably between 1% and 3% by weight of the water-soluble film. Suitable surfactants can include the nonionic, cationic, anionic and zwitterionic classes. Suitable surfactants include, but are not limited to, polyoxyethylenated polyoxypropylene glycols, alcohol ethoxylates, alkylphenol ethoxylates, tertiary acetylenic glycols and alkanolamides (nonionics), polyoxyethylenated amines, quaternary ammonium salts and quaternized polyoxyethylenated amines (cationics), and amine oxides, N-alkylbetaines and sulfobetaines (zwitterionics). Other suitable surfactants include dioctyl sodium sulfosuccinate, lactylated fatty acid esters of glycerol and propylene glycol, lactylic esters of fatty acids, sodium alkyl sulfates, polysorbate 20, polysorbate 60, polysorbate 65, polysorbate 80, lecithin, acetylated fatty acid esters of glycerol and propylene glycol, and acetylated esters of fatty acids, and combinations thereof.

Preferably the water-soluble film according to the invention comprises lubricants / release agents. Suitable lubricants/release agents can include, but are not limited to, fatty acids and their salts, fatty alcohols, fatty esters, fatty amines, fatty amine acetates and fatty amides. Preferred lubricants/release agents are fatty acids, fatty acid salts, and fatty amine acetates. The amount of lubricant/release agent in the water-soluble film is in a range of from 0.02% to 1.5%, preferably from 0.1% to 1% by weight of the water-soluble film.

Preferably, the water-soluble film comprises fillers, extenders, antiblocking agents, detackifying agents or a mixture thereof. Suitable fillers, extenders, antiblocking agents, detackifying agents or a mixture thereof include, but are not limited to, starches, modified starches, crosslinked polyvinylpyrrolidone, crosslinked cellulose, microcrystalline cellulose, silica, metallic oxides, calcium carbonate, talc and mica. Preferred materials are starches, modified starches and silica. Preferably, the amount of filler, extender, antiblocking agent, detackifying agent or mixture thereof in the water-soluble film is in a range of from 0.1% to 25%, preferably from 1% to 10%, more preferably from 2% to 8%, most preferably from 3% to 5% by weight of the water-soluble film. In the absence of starch, one preferred range for a suitable filler, extender, antiblocking agent, detackifying agent or mixture thereof is from 0.1% to 1%, preferably 4%, more preferably 6%, even more preferably from 1% to 4%, most preferably from 1% to 2.5%, by weight of the water-soluble film.

Preferably the water-soluble film according to the invention has a residual moisture content of at least 4%, more preferably in a range of from 4% to 15%, even more preferably of from 5% to 10% by weight of the water-soluble film as measured by Karl Fischer titration. The film has been pre-conditioned at a temperature of 20°C and a relative humidity of 60% for 24 hours prior to determining the residual moisture content.

Preferably the water-soluble film according to the invention comprises an aversive agent, preferably a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1ppm to 5000ppm, or even 100ppm to 2500ppm, or even 250ppm to 2000rpm in reference to the water-soluble film.

The water-soluble film according to the invention may be opaque, transparent or translucent. The water-soluble film according to the invention may comprise a printed area. The area of print may be achieved using standard techniques, such as flexographic printing or inkjet printing.

The water-soluble film or water-soluble unit dose article according to the invention or both may be coated with a lubricating agent. Preferably, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

## Pectin

Pectin is a complex polysaccharide found in the cell walls of various fruits and vegetables. It is a natural substance that acts as a structural component, providing strength and rigidity to plant tissues. Pectin is primarily extracted from citrus fruits, apples, and other sources rich in this polysaccharide.

Chemically, pectin is composed of a chain of sugar molecules, including galacturonic acid, which is the main building block. The structure of pectin can vary depending on factors such as the source and extraction method. Pectin molecules may contain side chains of various sugars, such as arabinose, galactose, and rhamnose, which contribute to its functional properties. It can also have methyl esters of galacturonic acid that are native to the material.

The pectin may be unmodified or modified and such modification includes substitution (alkylation, amidation, quaternization, thiolation, sulfation, oxidation, etc.), chain elongation (cross-linking and grafting) and depolymerization (chemical, physical, and enzymatic degradation).

Pectins comprise helical chains of galacturonic acid (GalA) residues linked by alfa-1,4 glycosidic linkages, wherein the carboxyl groups may be esterified to any degree with methyl groups or may be partially or completely converted into salts. The pectin may comprise any type of galacturonan including heterogalacturonans (HG), substituted galacturonans, rhamnogalacturonan I pectins (RG-I), rhamnogalacturonan II (RG-II), xylogalacturonan (XGA) or any mixture thereof.

## Esterification

The esterification level or degree of esterification (DE) is the ratio of esterified galacturonic acid groups to total galacturonic acid groups (and thus having a value between 0% and 100%). Preferably the degree of esterification is from 1% to 49%, more preferably from 25% to 48%, most preferably from 24 to 35%.

The level of esterification by methyl groups may be such that the pectin is a high methoxy pectin (HM pectin) - with more than half of all the galacturonic acid esterified; or a low methoxy pectin (LM pectin) with less than half of all the galacturonic acid esterified. In the case of LM pectin the degree of methoxylation is preferably from 1% to 49%, more

preferably from 25% to 48%, most preferably from 24 to 35%. Preferably the pectin is a high methoxy pectin. Amidated Pectin

The pectin can be amidated. Alternatively, the pectin may be free of amidation. A representative segment of a nonacetylated, non-amidated pectin molecule

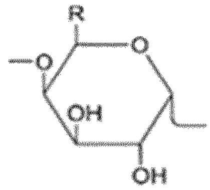

$R = -CO_2CH_3, -CO_2^-, \text{ or } -CO_2H$

By "amidated pectin" it is intended to mean that the pectin is modified by conversion of a portion of the carboxylic groups to carboxylic acid amide, e.g. as with the amidated unit shown below:

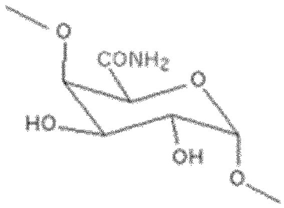

Preferably the degree of amidation is from 1% to 90%, more preferably from 10 to 50% even more preferably from 20% to 40% most preferably from 20 to 30%. Degree of amidation (DA) can be measure by various known methods for example near infrared spectroscopy, based on the total number of galacturonic acid units in the molecule.

Pectins may be amidated by any suitable method e.g.by ammonia which may be dissolved in methanol or in aqueous form. This converts the methyl ester groups into carboxamide [-CONH2] groups. Because in the process, methyl ester groups are lost as they are converted into carboxamide groups a low methoxy (LM) pectin (by definition) is formed. Amdiated (LM) pections may have 15 - 25% of the carboxyl groups converted into carboxamide groups.

Low Methoxy Amidated Pectin

Amidation may achieve reduced methyl levels and so providing a low methoxy, amidated pectin.

Source

The pectin is preferably plant derived and may be sourced from any suitable source such as citrus peel or pomace from e.g., both by-products of fruit production. Pomace may also be obtained from sugar beet.

Pectin MW

The pectin has a weight average molecular weight of not less than 200,000 g/mol, preferably not less than 250,000 g/mol, more preferably not less than 300,000 g/mol.

Polyvinyl alcohol

The water-soluble film comprises polyvinyl alcohol. The water-soluble polymer can be made by mixing pectin with polyvinyl alcohol. The starting polyvinyl alcohol can be a polyvinyl alcohol homopolymer or a polyvinyl alcohol copolymer, or a blend thereof. Preferably, the starting polyvinyl alcohol is a polyvinyl alcohol homopolymer, or a blend thereof.

The term "homopolymer" generally includes polymers having a single type of monomeric repeating unit (e.g., a polymeric chain consisting of or consisting essentially of a single monomeric repeating unit). For the particular case of polyvinylalcohol, the term "homopolymer" includes polymers having a distribution of vinyl alcohol monomer units and optionally vinyl acetate monomer units, depending on the degree of hydrolysis (e.g., a polymeric chain consisting of or consisting essentially of vinyl alcohol and vinyl acetate monomer units). In the limiting case of 100% hydrolysis, a polyvinylalcohol homopolymer can include a true homopolymer having only vinyl alcohol units.

The term "copolymer" generally includes polymers having two or more types of monomeric repeating units (e.g., a polymeric chain consisting of or consisting essentially of two or more different monomeric repeating units, whether as random copolymers, block copolymers, etc.). For the particular case of polyvinylalcohol, the term "copolymer" (or "polyvinylalcohol copolymer") includes copolymers having a distribution of vinyl alcohol monomer units and optionally vinyl acetate monomer units, depending on the degree of hydrolysis, as well as at least one other type of monomeric repeating unit (e.g., a ter- (or higher) polymeric chain consisting of or consisting essentially of vinyl alcohol monomer units, vinyl acetate monomer units, and one or more other monomer units, for example anionic or further nonionic monomer units). In the limiting case of 100% hydrolysis, a polyvinylalcohol copolymer can include a copolymer having vinyl alcohol units and one or more other monomer units, but no vinyl acetate units.

Preferably, the polyvinyl alcohol polymer preferably polyvinyl alcohol homopolymer has an average percentage degree of hydrolysis of from 75% to 100%, preferably of from 80% to 95%, most preferably of from 85% to 90%. A person skilled in the art will know how to measure the degree of hydrolysis of a polyvinyl alcohol polymer. A suitable test method to measure the degree of hydrolysis is as according to standard method JIS K6726.

Preferably, the polyvinyl alcohol polymer preferably homopolymer has an average viscosity of from 1 to 30 mPas, more preferably from 5 to 25mPas, most preferably from 10 to 25 mPas, wherein the viscosity is measured as a 4% aqueous solution in demineralized water at 20oC. Throughout this invention the viscosity of any polyvinyl alcohol polymer may be determined by measuring a freshly made solution using a Brookfield LV type viscometer with UL adapter as described in British Standard EN ISO 15023-2:2006 Annex E Brookfield Test method. It is standard practice to state the viscosity of 4% aqueous polyvinyl alcohol solutions at 20°C.

Suitable polyvinyl alcohol homopolymers could be obtained from Sigma Aldrich under the Mowiol tradename.

Preferably, the water soluble polymer is present at 60% to 80% by weight of the water-soluble film according to the invention and consists of a mixture of a pectin and polyvinyl alcohol. Preferably the polyvinyl alcohol starting material is a homopolymer having an average percentage degree of hydrolysis of from 85% to 90% and an average viscosity of from 10 to 20 mPas as measured as a 4% aqueous solution in demineralized water at 20°C.

Method of Making Film

The water-soluble film according to the invention may be formed by admixing and cocasting the pectin and polyvinyl alcohol according to the types and amounts described herein, together with the preferred and optional secondary additives described herein within a casting solution. If the polymers are first admixed then the water-soluble film is preferably formed by casting the resulting admixture (e.g., along with other plasticizers and other additives) to form a film. Another aspect is characterized by the water-soluble film being formed by extrusion, for example, blown extrusion. Most preferably the water-soluble films according to the invention are prepared by solvent casting.

Water-soluble unit dose article

A further aspect of the present invention is a water-soluble unit dose article comprising a water-soluble film according to the present invention, a treatment composition and at least one internal compartment, wherein the treatment composition is contained within the at least one compartment. The treatment composition is described in more detail below.

The water-soluble unit dose article comprises the water-soluble film shaped such that the unit-dose article comprises at least one internal compartment surrounded by the water-soluble film. The unit dose article may comprise a first water-soluble film and a second water-soluble film sealed to one another such to define the internal compartment. The water-soluble unit dose article is constructed such that the treatment composition does not leak out of the compartment during storage. However, upon addition of the water-soluble unit dose article to water, the water-soluble film dissolves and releases the contents of the internal compartment into the wash liquor.

The compartment should be understood as meaning a closed internal space within the unit dose article, which holds the detergent composition. During manufacture, a first water-soluble film may be shaped to comprise an open compartment into which the treatment composition is added. A second water-soluble film is then laid over the first film in such an orientation as to close the opening of the compartment. The first and second films are then sealed together along a seal region. Sealing could be done following solvent sealing, heat sealing, or a combination thereof. A preferred sealing solvent is water.

The unit dose article may comprise more than one compartment, even at least two compartments, or even at least three compartments. The compartments may be arranged in superposed orientation, i.e. one positioned on top of the other. In such an orientation the unit dose article will comprise three films: top, middle and bottom. Alternatively, the compartments may be positioned in a side-by-side orientation, i.e. one orientated next to the other. The compartments may even be orientated in a ‘tyre and rim’ arrangement, i.e. a first compartment is positioned next to a second compartment, but the first compartment at least partially surrounds the second compartment but does not completely enclose the second

compartment. Alternatively, one compartment may be completely enclosed within another compartment.

Wherein the unit dose article comprises at least two compartments, one of the compartments may be smaller than the other compartment. Wherein the unit dose article comprises at least three compartments, two of the compartments may be smaller than the third compartment, and preferably the smaller compartments are superposed on the larger compartment. The superposed compartments preferably are orientated side-by-side.

Preferably, the water-soluble unit dose article comprises at least two compartments, preferably at least three compartments, even more preferably at least four compartments, most preferably wherein the water-soluble unit dose article comprises a first compartment and at least a second compartment superposed onto the first compartment, more preferably at least a third compartment orientated side-by-side with respect to the second compartment and the second compartment and the third compartments are superposed onto the first compartment, even more preferably at least a fourth compartment orientated side-by-side with respect to the second compartment and third compartment and the second compartment, the third compartment and the fourth compartments are superposed onto the first compartment.

In a multi-compartment orientation, the detergent composition may be comprised in at least one of the compartments. It may for example be comprised in just one compartment, or may be comprised in two compartments, or even in three compartments, or even in all available compartments.

Each compartment may comprise the same or different compositions. The different compositions could all be in the same form, or they may be in different forms.

The water-soluble unit dose article may comprise at least two internal compartments, wherein the detergent composition is comprised in at least one of the compartments, preferably wherein the unit dose article comprises at least three compartments, wherein the detergent composition is comprised in at least one of the compartments.

The water-soluble unit dose article according to the invention may comprise at least one water-soluble film according to the invention. Alternatively, the water-soluble unit dose article according to the invention may comprise at least two or even at least three water-soluble films according to the invention. Alternatively, the water-soluble unit dose article according to the invention solely comprises water-soluble films which are according to the invention, i.e. not comprising any water-soluble films outside the scope of the invention. Preferably, water-soluble mono-compartment unit dose articles or water-soluble multi-compartment unit dose articles in which the multiple compartments are in a side by side configuration are created in which both the bottom and top water-soluble films enclosing the individual compartment(s) are water-soluble films according to the invention. Alternatively, either the top or the bottom water-soluble film is according to the invention. Water-soluble unit dose articles may be created with compartments in a superposed configuration. Under this configuration each of the top, bottom and middle water-soluble film(s) can be water-soluble films according to the invention. Alternatively, one, for example, solely the middle water-soluble film or solely the top water-soluble film or solely the bottom water-soluble film, or a combination of any of these water-soluble films can be a water-soluble film according to the invention while the remaining water-soluble film(s) is (are) outside the scope of the invention. Preferably, all water-soluble films comprised within the water-soluble unit dose article are water-soluble films according to the invention. These water-soluble films according to the invention could be chemically and physically the same, or alternatively could be chemically and/or physically different. By "different" we mean the first water-soluble film is intended to have at least one chemical and/or physical characteristic different to that of the second water-soluble film. This characteristic can be by selecting a different polymeric resin, the polymeric resin for example varying in average individual polymer solution viscosity, average individual polymer degree of hydrolysis, ratio between the first and the second water-soluble polymers, or mixtures thereof. 'Targeted averages' take into consideration the standard polymer variation inherent to any manufacture process. Alternatively, this characteristic can be by varying the relative content of the individual components inside the water-soluble film such as polymeric resin to plasticizer content or water content, or even varying the exact chemistry of the additives. The "different" characteristic is assessed for the starting films prior to deformation, e.g. differences in water-soluble film content as a consequence of a deformation action, exposure to encapsulated detergent composition resulting in exchange of actives between film and the detergent composition, as well as actives exchange with surrounding storage environment are excluded in this assessment.

FIG.1 discloses a water-soluble unit dose article (1) according to the present invention. The water-soluble unit dose article (1) comprises a first water-soluble film (2) and a second water-soluble film (3) which are sealed together at a seal region (4). The detergent composition (5) is comprised within the water-soluble soluble unit dose article (1).

Treatment composition

The treatment composition may be selected from laundry detergent composition, laundry softening composition, automatic dishwashing composition, hard surface cleaning composition or a mixture thereof, preferably a laundry detergent composition, preferably the treatment composition is a liquid, a powder, or a mixture thereof, preferably a liquid composition.

The term liquid includes a gel, a solution, a dispersion, a paste or a mixture thereof.

By powder we herein mean the treatment composition may comprise solid particulates or may be a single

homogenous solid. Preferably, the powder treatment composition comprises particles. This means the powder treatment composition comprises individual solid particles as opposed to the solid being a single homogenous solid. The particles may be free-flowing or may be compacted, preferably free-flowing.

Preferably, the treatment composition is a laundry detergent composition, most preferably a liquid laundry detergent composition.

The laundry detergent composition can be used in a fabric hand wash operation or may be used in an automatic machine fabric wash operation, preferably an automatic machine fabric wash operation.

Preferably, the treatment composition comprises a non-soap surfactant, wherein the non-soap surfactant comprises an anionic non-soap surfactant and a non-ionic surfactant. Preferably, the treatment composition comprises between 10% and 60%, more preferably between 20% and 55% by weight of the treatment composition of the non-soap surfactant.

The weight ratio of non-soap anionic surfactant to nonionic surfactant may be from 1:1 to 20:1, preferably from 1.5:1 to 17.5:1, from 2:1 to 15:1, or from 2.5:1 to 13:1.

Preferably, the non-soap anionic surfactant comprises linear alkylbenzene sulphonate, alkyl sulphate or a mixture thereof. The weight ratio of linear alkylbenzene sulphonate to alkyl sulphate is from 1:2 to 9:1, preferably from 1:1 to 7:1, more preferably from 1:1 to 5:1, most preferably from 1: 1 to 4:1.

Exemplary linear alkylbenzene sulphonates are $C_{10}$-$C_{16}$ alkyl benzene sulfonic acids, or $C_{11}$-$C_{14}$ alkyl benzene sulfonic acids. By 'linear', we herein mean the alkyl group is linear. Alkyl benzene sulfonates are well known in the art.

The alkyl sulphate anionic surfactant may comprise alkoxylated alkyl sulphate or nonalkoxylated alkyl sulphate or a mixture thereof. The alkoxylated alkyl sulphate anionic surfactant preferably is an ethoxylated alkyl sulphate anionic surfactant.

The alkyl sulphate anionic surfactant may comprise an ethoxylated alkyl sulphate anionic surfactant, preferably with a mol average degree of ethoxylation from 1 to 5, more preferably from 1 to 3, most preferably from 2 to 3.

The alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, more preferably from 1 to 3, most preferably from 2 to 3.

The alkyl fraction of the alkyl sulphate anionic surfactant can preferably be derived from fatty alcohols, oxo-synthesized alcohols, guerbet alcohols, or mixtures thereof.

Preferably, the treatment composition comprises between 10% and 50%, more preferably between 15% and 45%, even more preferably between 20% and 40%, most preferably between 30% and 40% by weight of the treatment composition of the non-soap anionic surfactant.

Preferably, the non-ionic surfactant is selected from alcohol alkoxylate, an oxo-synthesised alcohol alkoxylate, Guerbet alcohol alkoxylates, alkyl phenol alcohol alkoxylates or a mixture thereof.

The treatment composition preferably comprises between 0.01% and 25%, preferably between 1% and 22.5%, more preferably between 5% and 20%, most preferably between 8% and 20% by weight of the treatment composition of a non-ionic surfactant.

Preferably, the treatment composition comprises between 0.5% and 20%, more preferably between 1% and 15%, even more preferably between 1.5% and 10%, most preferably between 2% and 8% by weight of the treatment composition of soap, preferably a fatty acid salt, more preferably an amine neutralized fatty acid salt, wherein preferably the amine is an alkanolamine more preferably selected from monoethanolamine, diethanolamine, triethanolamine or a mixture thereof, more preferably monoethanolamine.

Preferably, the treatment composition is a liquid treatment composition, more preferably the liquid treatment composition comprises less than 15%, more preferably less than 13%, even more preferably from 1% to 12%, most preferably from 5% to 12% by weight of the liquid treatment composition of water.

Preferably, the treatment composition is a liquid treatment composition comprising a non-aqueous solvent selected from 1,2-propanediol, dipropylene glycol, tripropyleneglycol, glycerol, sorbitol, polyethylene glycol or a mixture thereof. Preferably, the liquid treatment composition comprises between 10% and 40%, preferably between 15% and 30% by weight of the liquid treatment composition of the non-aqueous solvent.

Preferably the treatment composition comprises a perfume.

Preferably, the treatment composition comprises an adjunct ingredient selected from the group comprising builders including enzymes, citrate, bleach, bleach catalyst, dye, hueing dye, brightener, cleaning polymers including alkoxylated polyamines and polyethyleneimines, soil release polymer, surfactant, solvent, dye transfer inhibitors, chelant, encapsulated perfume, polycarboxylates, structurant, pH trimming agents, and mixtures thereof.

Those skilled in the art will know how to formulate and make a suitable treatment composition using known knowledge and techniques. The treatment composition may comprise common detergent ingredients including surfactants, polymers, bleach, enzymes, perfumes, dyes, structing agents, fillers, water or a mixture thereof.

Those skilled in the art will be aware of known techniques to make a water-soluble unit dose article according to the present invention.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

EXAMPLES

The compatibility of films with a treatment composition (laundry liquid detergent composition), the dissolution and mechanical properties (e-modulus, % tensile strain at break and tensile stress at break) have been compared for films according to the invention (films comprising pectin) versus comparative films comprising carrageenan or caseinate instead of pectin.

| | Film A | Film B | Film C |
|---|---|---|---|
| | 20% caseinate / 80% PVA | 20% carrageenan / 80% PVA | 20% pectin / 80% PVA |
| % swelling | 20 | 9 | 6 |
| % dissolution | 24 | 14 | 29 |
| E-modulus (MPa) | 219 | 151 | 101 |
| % tensile strain at break | 291 | 201 | 304 |
| tensile stress at break (MPa) | 37 | 35 | 35 |

As can be seen from the table above, the film according to the invention (Film C) presents better film liquid treatment composition interaction than a film comprising caseinate (Film A) and it has better dissolution and mechanical properties than the comparative films (Film A and Film B). The pectin/PVA solution was found to be more suitable for casting.

In more detail:

- As indicated by the % swelling, a clear improvement in preventing over-plasticization of the water-soluble film when in contact with a treatment composition is observed when replacing a protein-comprising resin (caseinate) by a polysaccharide-comprising resin (carrageenan / pectin).
- In the case of carrageenan the improved film-treatment composition compatibility comes at the expense of dissolution and mechanical properties of the film, more particularly a reduced % dissolved film and a reduced % tensile strain at break is observed. A more pronounced reduction in E-modulus is equally observed for the inventive film. These data show that the more robust profile observed for pectin-comprising film is not seen across other polysaccharide-comprising films.
- Carrageenan was observed to be sensitive towards gelling and flocculation upon cooling of the casting solution, and as such required more stringent control of making conditions to obtain the resulting film. This high gelling behaviour was even more pronounced for another polysaccharide-containing resin (alginate) rendering it extremely hard to even obtain a film suitable for characterization and as such was not further processed.
- Caseinate based solutions were equally observed to be sensitive to foaming, complicating film making process accordingly, a complication not observed with the inventive film.

A description of the tests performed is detailed herein below.

Film making process

A 15 wt% active aqueous polyvinyl alcohol homopolymer stock solution (Mowiol 18/88 - ex Sigma Aldrich) was prepared through mixing the polyvinyl alcohol homopolymer in a 6 wt% glycerol plasticizer solution in demineralized water at 60°C until no undissolved polyvinyl alcohol homopolymer was visible anymore.

A 30 wt% active polysaccharide or protein solution (pectin (from citrus) ex Sigma Aldrich, Iotacarrageenan ex TCI, Sodium caseinate ex Acros, Sodium Alginate ex VWR) was prepared in demineralized water.

The polysaccharide or protein solution was added dropwise under stirring action to the aqueous polyvinyl alcohol homopolymer / glycerol solution till the targeted polyvinyl alcohol homopolymer - polysaccharide / protein weight ratio is obtained in the casting solution. The solution was mixed overnight to a homogeneous solution and allowed to stand for 1-2h to enable de-aeration prior to casting.

The solution was poured into a thin layer through a film applicator with a wet gap in the range of 250 μm to 350 μm onto a PET casting plate, and allowed to dry overnight at room temperature and 35% rH. The resulting film comprises 74wt% of water-soluble polymeric resin, 20wt% of glycerol plasticizer system and 6% of water. Individual film thicknesses are summarized in the table below.

| Polymeric resin | Film thickness (micron) |
|---|---|
| 20% caseinate / 80% PVA | 83 |
| 20% carrageenan / 80% PVA | 56 |
| 20% pectin / 80% PVA | 65 |

Treatment composition

The following liquid laundry detergent composition was used to assess % swelling of the films.

| Formula | Weight % as 100% Active |
|---|---|
| C24 AE3S anionic surfactant | 7.8 |
| HLAS anionic surfactant | 27.3 |
| NI24 EO7 nonionic surfactant | 3.6 |
| Citric acid | 0.7 |
| TPK Fatty acid | 11.3 |
| AF8017 anti-foaming agent | 0.25 |
| Brightener 49 | 0.4 |
| HEDP | 0.7 |
| Ethoxylated polyethyleneimine* | 1.5 |
| Zwitterionic polyamine** | 1.5 |
| 1,2 PropaneDiol | 15.8 |
| Glycerine | 5.0 |
| K2SO3 | 0.4 |
| MEA (MonoEthanolAmine) | 9.5 |
| Hydrogenated castor oil | 0.1 |
| MgCl2 | 0.1 |
| Water | 10.1 |
| Acticide preservative | 0.005 |
| Perfume | 3.3 |
| Dye | 0.009 |
| Minors | Balance |
| pH (10% solution in demineralized water) | 7.4 |

* Lutensol FP620 ex BASF - ethoxylated polyethyleneimine (PEI600 EO20)
** Lutensit Z96 (zwitterionic polyamine ex BASF - zwitterionic hexamethylene diamine, 100% quaternized and about 40% of the polyethoxy (EO24) groups are sulfonated), preferably having a structure below).

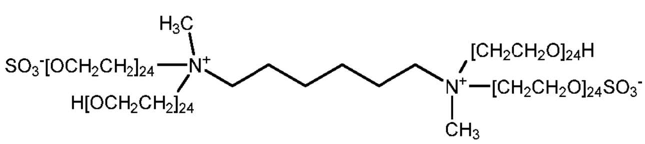

Test methods

% swelling:

Water-soluble film samples measuring 11 cm by 12 cm were prepared and exposed to a test treatment composition. 750 ml of this test liquid treatment composition was required for each test film. The bottom of a clean inert glass recipient was covered with a thin layer of liquid and a first film to be tested was spread on the liquid; air bubbles trapped under the film were gently pushed towards the sides. A thin layer of liquid was spread on top of the first film sample followed by addition of a second film sample. This process is repeated till 5 film samples have been piled up with in-between thin film layers of liquid. The remaining liquid was then gently poured on top of the fifth film, in such a way that the films were fully immersed into the liquid.

The film should remain free of wrinkles and no air bubbles should be in contact with the film. The film stayed in contact with the liquid and was stored under closed vessel conditions for 5 days at 50°C and 1 night at 21°C. A separate glass recipient was used for each different film tested. The film was then removed from the storage vessel, and the excess liquid was removed from the film. A piece of paper was put on the film which was laid on top of a bench paper, and then the film was wiped dry thoroughly with dry paper, e.g. a tissue dry and free of fibers that could stick to the film surface. The weight of the film was measured pre and post immersion testing, and the relative gain weight/loss has been calculated and expressed as a % change according to below formula: % change = (end weight - starting weight / starting weight)* 100. The average value of the five film samples per test solution was calculated and reported.

A negative film swelling value may result in a brittle film upon product ageing, while a film swelling value of more than 15% may render the unit dose article floppy upon ageing and as such aesthetically unappealing. Preferably the film swelling value is between 5% and 15%.

% dissolution:

Within this Dissolution Chamber Residue Test method, for each film to be tested, three test specimens are cut from a selected test film having a thickness of about 76 µm using a cutting punch. If cut from a film web made by a continuous process, the specimens should be cut from areas of web evenly spaced along the transverse direction of the web (i.e., perpendicular to the machine direction), if applicable. Weigh the film specimen and track the specimen through the test. Record the initial film weight (Fo). Weigh a set of two sonicated, clean, and dry screens for each specimen and track them through the test. Record the initial screen weights (collectively, so for the two screens combined - So). Assemble a specimen dissolution chamber by flatly sandwiching the film specimen between the center of the two screens, followed by two rubber gaskets (one gasket on each side between the screen and washer), and then the two washers. Secure the dissolution chamber assembly with four binder clips evenly spaced around the washers and the clips folded back away from the screens. Fill a beaker with 1,500 ml of RO water (e.g. demineralized water) at laboratory room temperature (5 +/- 1°C) and record the room temperature. Set the timer to a prescribed immersion time of 10 minutes. Place the dissolution chamber assembly into the beaker and immediately start the timer, inserting the dissolution chamber assembly at an approximate 45 degree entry angle into the water surface. This entry angle helps remove air bubbles from the chamber. The dissolution chamber assembly rests on the beaker bottom such that the test specimen film is positioned horizontally about 10 mm from the bottom. The four folded-back binder clips of the dissolution chamber assembly are suitable to maintain the about 10 mm film clearance from the beaker bottom, however, any other equivalent support means may be used. At the end of the 10 minutes, slowly remove the dissolution chamber assembly from the beaker at an approximate 45 degree angle. Hold the dissolution chamber assembly horizontally over an aluminum pan that has been pre-weighed to catch any drips from the screens and carefully remove the binder clips, washers, and gaskets. Do not break open the sandwiched screens. Place the sandwiched screens (i.e., screen/residual undissolved film/screen) over the aluminum pan and into an oven at 100°C for 30 minutes to dry. Weigh the dried set of sandwiched screens including any residual undissolved film therein together with the aluminum pan. Subtract the weight of the aluminum pan and record the final sandwiched screen weight (collectively Sf, including the dried film drippings). Calculate % residue ("DC residue") left for the film specimen:

$$\text{DC residue} = 100 \text{ x } ((Sf\text{-}So)/F0)$$

The % dissolution hence equals 100% minus the % residue.

The actual thickness of the water-soluble film sample was measured prior to testing and % dissolution data were normalized from that actual film thickness towards a 76 micron test film to ensure fair comparison between test legs.

E-modulus, % tensile strain at break and tensile stress at break:

The procedure includes the determination of maximum tensile strength, e-modulus, and % elongation at break, according

to ASTM D882 ("Standard Test Method for Tensile Properties of Thin Plastic Sheeting") or equivalent. An INSTRON tensile testing apparatus (Model 5544 Tensile Tester or equivalent) is used for the collection of film data. Tests are conducted in the standard laboratory atmosphere of 23±2.0°C and 35±5% relative humidity. A minimum of three test specimens, each cut with reliable cutting tools to ensure dimensional stability and reproducibility, are tested in the machine direction (MD) (where applicable) for each measurement. Test specimens are prepared from a single film sheet of 12cm long (MD) by 17cm wide, which is then cut into individual 1"-wide (2.54 cm) samples having a thickness of about 76 μm. The sample is transferred to the INSTRON tensile testing machine to proceed with testing.

The tensile testing machine is prepared according to manufacturer instructions, equipped with a 500 N load cell, and calibrated. The correct grips and faces are fitted (INSTRON grips having model number 2702-032 faces, which are rubber coated and 25 mm wide, or equivalent). The samples are mounted into the tensile testing machine and analyzed to determine the e-modulus (i.e. initial tangent of the stress-strain curve), maximum tensile strength (i.e. maximum stress recorded, usually equivalent to stress required to break). The % tensile strain at break is measured following the same test method. The actual thickness of the water-soluble film sample was measured prior to testing and mechanical test data were normalized from that actual film thickness towards a 76 micron test film to ensure fair comparison between test legs.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A water-soluble film, wherein the water-soluble film comprises a water-soluble polymer, wherein the water-soluble polymer comprises a blend of:

   i) pectin; and
   ii) polyvinyl alcohol; and

   wherein the pectin and the polyvinyl alcohol polymer are in a weight ratio of from 1:9 to less than 1:1.

2. The water-soluble film according to claim 1 wherein the pectin and the polyvinyl alcohol are in a weight ratio of from 1:9 to 3:7.

3. The water-soluble film according to any of claims 1 or 2, wherein the water-soluble polymer is present between 50% and 95%, preferably between 55% and 90%, more preferably between 60% and 80% by weight of the film.

4. The water-soluble film according to any of the preceding claims wherein the film comprises a non-aqueous plasticizer, preferably wherein the non-aqueous plasticizer is selected from polyols, sugar alcohols, and mixtures thereof, more preferably selected from glycerol, 1,2-propanediol, trimethylolpropane, dipropylene glycol, 2-methyl-1,3-propanediol, 2-ethyl-2-hydroxymethyl-1,3-propanediol, triethyleneglycol, polyethyleneglycol, sorbitol, or a mixture thereof, most preferably selected from glycerol, sorbitol, trimethylolpropane, dipropylene glycol, and mixtures thereof, preferably wherein the film comprises between 5% and 50%, preferably between 10% and 40%, more preferably between 20% and 30% by weight of the film of the non-aqueous plasticizer.

5. The water-soluble film according to any of the preceding claims wherein the polyvinyl alcohol has an average percentage degree of hydrolysis of from 75% to 100%, and wherein the polyvinyl alcohol has an average viscosity of from 1 mPas to 30 mPas, wherein the viscosity is measured as a 4% aqueous solution in demineralized water at 20°C.

6. The water-soluble film according to any of the preceding claims, wherein the polyvinyl alcohol has an average percentage degree of hydrolysis of from 80% to 95% preferably of from 85% to 90%.

7. The water-soluble film according to any of the preceding claims, wherein the polyvinyl alcohol consists of vinyl alcohol and vinyl acetate monomer units.

8. The water-soluble film according to any of the preceding claims, wherein the polyvinyl alcohol has an average viscosity of from 5 mPas to 25mPas, preferably from 10 mPas to 25 mPas, wherein the viscosity is measured as a 4% aqueous solution in demineralized water at 20°C.

9. The water-soluble film according to any preceding claims wherein the water-soluble film comprises a surfactant in an amount between 0.1 % and 5%, preferably between 1% and 3% by weight of the water-soluble film.

10. The water-soluble film according to any of the preceding claims wherein the water-soluble film comprises a residual moisture content of at least 4%, more preferably from 4% to 15%, even more preferably from 5% to 10% by weight of the film, as measured by Karl Fischer titration.

11. The water-soluble film according to any of the preceding claims, wherein the water-soluble film has a thickness of between 30μm and 150μm, preferably between 50μm and 100μm, most preferably between 60μm and 85μm.

12. A process for making the film according to any of the preceding claims comprising the steps of:

i) dissolving the polyvinyl alcohol, pectin and optional additives in water to form an aqueous solution; and
ii) casting the solution resulting from step i) into a film.

13. A water-soluble unit dose article comprising a water-soluble film according to any of the preceding claims, a treatment composition and at least one internal compartment, wherein the treatment composition is contained within the at least one internal compartment.

14. The water-soluble unit dose article according to claim 13, wherein the treatment composition is selected from a laundry detergent composition, laundry softening composition, automatic dishwashing composition, hard surface cleaning composition or a mixture thereof, preferably a laundry detergent composition, preferably the treatment composition is a liquid, a powder, or a mixture thereof, preferably a liquid laundry composition.

15. The water-soluble unit dose article according to any of claims 13 or 14 wherein the treatment composition comprises a non-soap surfactant, wherein preferably, the non-soap surfactant is selected from anionic non-soap surfactants, non-ionic surfactants, and mixtures thereof, preferably wherein the treatment composition comprises between 10% and 60%, more preferably between 20% and 55% by weight of the treatment composition of the non-soap surfactant.

16. The water-soluble unit dose article according to any of claims 13 to 15, wherein the treatment composition comprises less than 15%, more preferably less than 13%, most preferably between 1% and 12%, even more preferably from 5% to 12% by weight of the treatment composition of water.

17. The water-soluble unit dose article according to any of claims 13 to 16, wherein the treatment composition comprises between 10% and 40%, preferably between 15% and 30% by weight of the treatment composition of a non-aqueous solvent.

FIG. 1

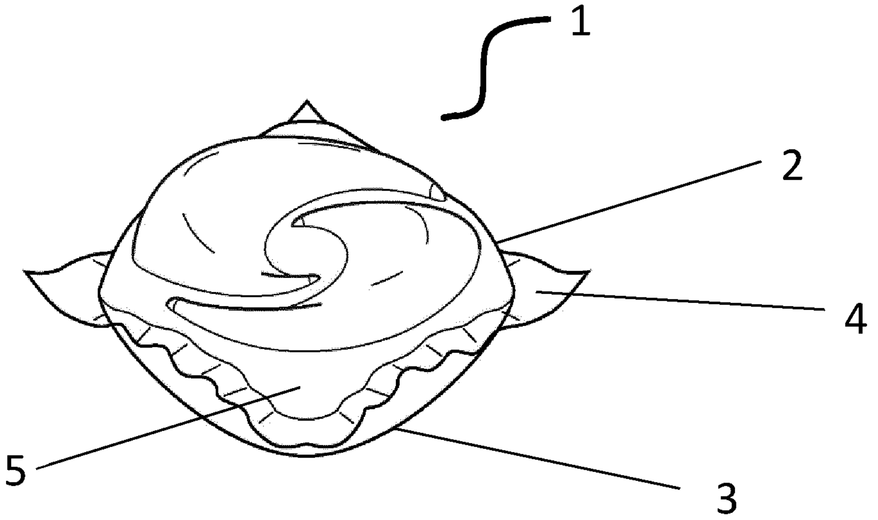

Europäisches Patentamt
European Patent Office
Office européen des brevets

# EUROPEAN SEARCH REPORT

Application Number
EP 24 20 9734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2014 0108803 A (ICURE PHARM INC [KR]) 15 September 2014 (2014-09-15)<br>* paragraph [0001]; example 3; table 3 *<br>----- | 1,2,4,5, 10 | INV.<br>C11D3/22<br>C11D3/37<br>C11D17/04<br>B65D65/46<br>C08F216/06<br>C08J5/18<br>C08L5/06<br>C08L29/04 |
| X | US 5 646 206 A (COFFIN DAVID R [US] ET AL) 8 July 1997 (1997-07-08)<br>* column 1, lines 10-22;column 7, line 56 to column 8, line 9;column 9, lines 16-19; claims 1,5 *<br>----- | 1,3,5-8, 10-12 | |
| X | CN 113 045 847 A (SHANDONG YOUHUA NEW MAT CO LTD) 29 June 2021 (2021-06-29)<br>* page 14, line 3;<br>claim 1; examples 1-3 *<br>----- | 1-17 | |
| | | | TECHNICAL FIELDS SEARCHED (IPC) |
| | | | C11D<br>C08J<br>C08F<br>B65D |

The present search report has been drawn up for all claims

2

| Place of search | Date of completion of the search | Examiner |
|---|---|---|
| The Hague | 24 March 2025 | Douelle, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 20 9734

This annex lists the patent family members relating to the patent documents cited in the above-mentioned European search report. The members are as contained in the European Patent Office EDP file on The European Patent Office is in no way liable for these particulars which are merely given for the purpose of information.

24-03-2025

| Patent document cited in search report | Publication date | Patent family member(s) | Publication date |
|---|---|---|---|
| KR 20140108803 A | 15-09-2014 | NONE | |
| US 5646206 A | 08-07-1997 | AU 7363996 A | 09-04-1997 |
| | | US 5646206 A | 08-07-1997 |
| | | WO 9711113 A1 | 27-03-1997 |
| CN 113045847 A | 29-06-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021127073 A1
- WO 202325655 A1
- WO 202325648 A1
- US 7022656 B